# EUROPEAN PATENT SPECIFICATION

(11) **EP 2 077 520 B1**
(45) Date of publication and mention of the grant of the patent: **13.04.2011**
(21) Application number: 08100030.9
(22) Date of filing: 02.01.2008
(51) Int. Cl.: G06Q 10/00

(54) **System and method for providing information relating to an email being provided to an electronic device**
System und Verfahren zur Bereitstellung von Information über eine an eine elektronische Kommunikationsvorrichtung geschickte E-Mail
Système et procédé pour fournir des informations associées à un email en cours d'envoi vers un dispositif électronique

(43) Date of publication of application: 08.07.2009
(73) Proprietor: RESEARCH IN MOTION LIMITED, Waterloo, Ontario N2L 3W8 (CA)
(72) Inventor: Adams, Neil, Waterloo Ontario N2K 4E4 (CA); Vander Veen, Raymond, Waterloo Ontario N2V 2M6 (CA)
(74) Representative: Moore, Barry

(56) References cited:
- EP-A- 1 156 630
- WO-A-2007/040922

## Description

The disclosure described herein generally relates to a system and method for processing and transmitting email, and in particular selectively obtaining and adding data, text and information into an email as it is processed, provided to and retrieved by an electronic device.

Current wireless handheld mobile communication devices perform a variety of functions to enable mobile users to stay current with information and communications, such as e-mail, corporate data and organizer information while they are away from their desks. A wireless connection to a server allows a mobile communication device to receive updates to previously received information and communications. When an email is received at a device and the email contains an item, such as a telephone number, the item can be highlighted. As such, when the email application on the device retrieves and opens the augmented email, the telephone number can be highlighted, underlined or otherwise emphasized in the text of the email, according to parameters determined by the meta tag and the functions in the application. Such features are provided on emails presented on a BlackBerry (trademark) device.

However, while a telephone number in an email is highlighted, highlighting of the number itself does not provide any additional information to the user of the device about relating to the origin of the number. For example, the identification of the owner of the number is not provided by the highlighting.

WO-A-2007040922 discloses a contact lookup system that is fed contact information and from which executes a search for possible related entities having identifiers relating to the contact information (e.g. if an email address is fed as contact information, alias or additional related information may be provided)

There is a need for a system and method which addresses deficiencies in the prior art.

### GENERAL

The description which follows and the embodiments described therein are provided by way of illustration of an example or examples of particular embodiments of the principles of the present invention. These examples are provided for the purposes of explanation and not limitation of those principles. In the description which follows, like parts are marked throughout the specification and the drawings with the same respective reference numerals.

In a first aspect, there is provided a method for providing information relating to an item embedded in an electronic transmission addressed to an electronic device as claimed in claims 1 to 4.

The method may be carried out on a server, as claimed in claims 5 to 8.

### BRIEF DESCRIPTION OF THE DRAWINGS

An embodiment will now be described, by way of example only, with reference to the accompanying drawings, in which:

Fig. 1 is a schematic representation of an electronic device having an email application operating thereon in accordance with an embodiment;

Fig. 2 is a block diagram of certain internal components and the email application in the device in Fig. 1;

Fig. 3 is a block diagram of data servers that are connected to a communication network that communicates with the device of Fig. 1 according to an embodiment;

Fig. 4 is a diagram of exemplary information that can be associated with an item and inserted into an email being sent to the device of Fig. 1 by an embodiment;

Fig. 5 is a flow chart of a process relating to insertion of an item into an email executed by the device of Fig. 1 according to an embodiment;

Fig. 6A is a block diagram of an exemplary data interface module of the device of Fig. 2;

Fig. 6B is a block diagram of exemplary controllers provided for the interface module of Fig. 6A; and

Fig. 7 is a block diagram of an annotated email providing information about an embedded item through a menu generated for on the display of the device of Fig. 1 as related to an embodiment.

### DESCRIPTION OF PREFERRED EMBODIMENTS

Exemplary details of aspect of embodiments are provided herein. First, a description is provided on general concepts and features of an embodiment. This is followed by features relating to associate an item in a transmission with information.

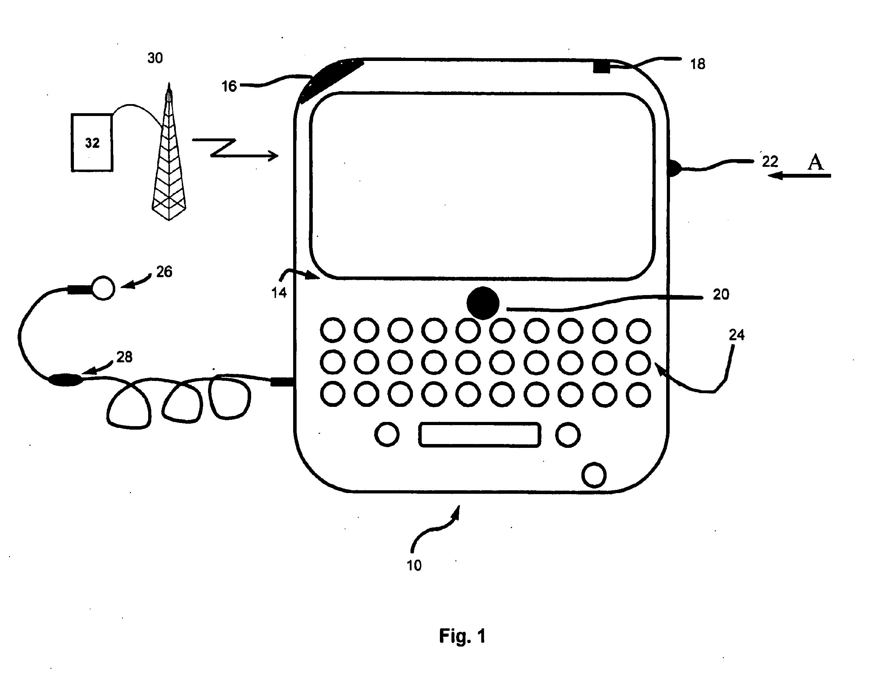

Fig. 1 provides general features of an electronic device for receiving electronic communications in accordance with an embodiment of the invention, which is indicated generally at 10. In the present embodiment, electronic device 10 is based on a computing platform having functionality of an enhanced personal digital assistant with cellphone and e-mail features. It is, however, to be understood that electronic device 10 can be based on construction design and functionality of other electronic devices, such as smart telephones, desktop computers pagers or laptops having telephony equipment. In a present embodiment, electronic device 10 includes a housing 12, an LCD 14, speaker 16, an LED indicator 18, a trackball 20, an ESC ("escape") key 22, keypad 24, a telephone headset comprised of an ear bud 26 and a microphone 28. ESC key 22 can be inwardly depressed along the path of arrow "A" as a means to provide additional input to device 10. Trackball 20 may be inwardly depressed as well.

It will be understood that housing 12 can be made from any suitable material as will occur to those of skill in the art and may be suitably formed to house and hold all components of device 10.

Device 10 is operable to transmit and receive wireless communications, such as telephone calls; and/or emails through network 30. Transmissions (e.g. data packets) can originate from one or more servers 32 at a data network connected to wireless network 30. Telephone calls may use any known wireless phone system such as a Global System for Mobile Communications ("GSM") system, Code Division Multiple Access ("CDMA") system, Cellular Digital Packet Data ("CDPD") system and Time Division Multiple Access ("TDMA") system. Other wireless phone systems can include Bluetooth and the many forms of 802.11 wireless broadband, like 802.11 a, 802.11 b, 802.11 g, etc. that support voice. Other embodiments include Voice over IP (VoIP) type streaming data communications that can simulate circuit switched phone calls. Ear bud 26 can be used to listen to phone calls and other sound messages and microphone 28 can be used to speak into and input sound messages to device 10.

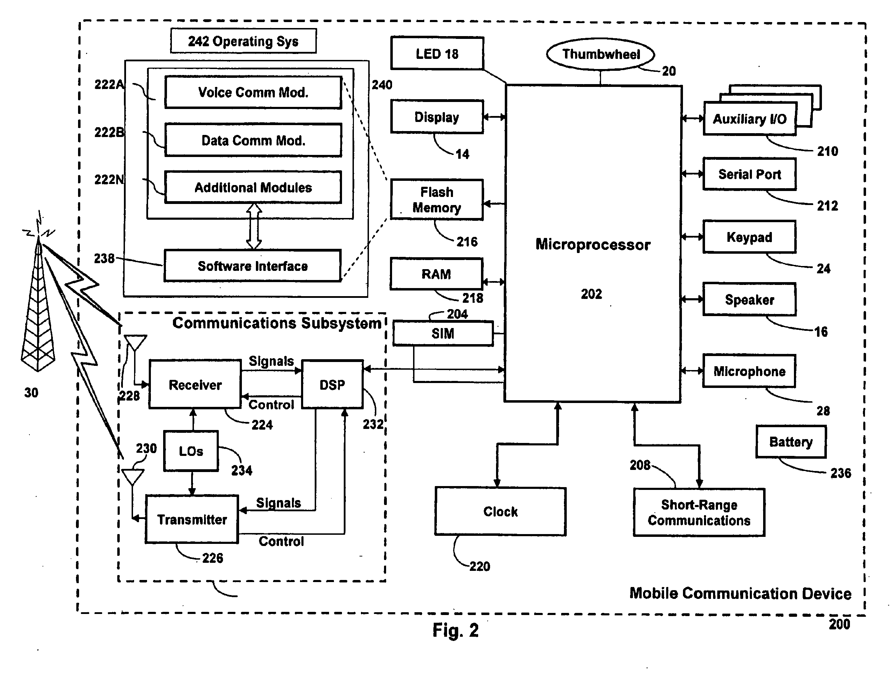

Referring to Fig. 2, functional components of device 10 are provided in schematic 200. The functional components are generally electronic, structural or electromechanical devices. In particular, microprocessor 202 is provided to control and receive almost all data, transmissions, inputs and outputs related to device 10. Microprocessor 202 is shown schematically as coupled to keypad 24, Subscriber Identity Module (SIM) interface 204 and other internal devices. Microprocessor 202 preferably controls the overall operation of the device 10 and its components. Exemplary microprocessors for microprocessor 202 include Data 950 (trade-mark) series microprocessors and the 6200 series microprocessors, all available from Intel Corporation. Microprocessor 202 is connected to other elements in device 10 through a series of electrical connections to its various input and output pins. Microprocessor 202 has an IRQ input line which allows it to receive signals from various devices. Appropriate interrupt firmware is provided which receives and reacts to the signals detected on the IRQ line.

In addition to the microprocessor 202, other internal devices of the device 10 are shown schematically in Fig. 2. These include: display 14; speaker 16; keypad 24; communication sub-system 206; short-range communication sub-system 208; auxiliary I/O devices 210; serial port 212; microphone port 214 for microphone 28; flash memory 216 (which provides persistent storage of data); random access memory (RAM) 218; clock 222 and other device sub-systems (not shown). Device 10 is preferably a two-way radio frequency (RF) communication device having voice and data communication capabilities. In addition, device 10 preferably has the capability to communicate with other computer systems via the Internet.

Operating system software executed by the microprocessor 202 is preferably stored in a computer readable medium, such as flash memory 216, but may be stored in other types of memory devices, such as read only memory (ROM) or similar storage element. In addition, system software, specific device applications, or parts thereof, may be temporarily loaded into a volatile store, such as RAM 218. Communication signals received by the mobile device may also be stored to RAM 218.

Microprocessor 202, in addition to its operating system functions, enables execution of software applications on device 10. A set of software (or firmware) applications 222 that control basic device operations, such as voice communication module 222A and data communication module 222B, may be installed on the device 10 during manufacture or downloaded thereafter. As well, additional software modules, such as software module 222N, which may be for instance a personal information manager (PIM) application, may be installed during manufacture or downloaded thereafter into device 10. A PIM may include functionality for organizing and managing data items of interest to the user, such as, but not limited to, e-mail, contacts, calendar events, voice mails, appointments, and task items. A PIM application has the ability to send and receive data items via the wireless network 30. PIM data items may be integrated, synchronized, and updated via the wireless network 30 with the mobile device subscriber's corresponding data items stored and/or associated with a host computer system. This functionality creates a mirrored host computer on the mobile device 30 with respect to such items. This can be particularly advantageous when the host computer system is the mobile device subscriber's office computer system. Data associated with each application can be stored in flash memory 216.

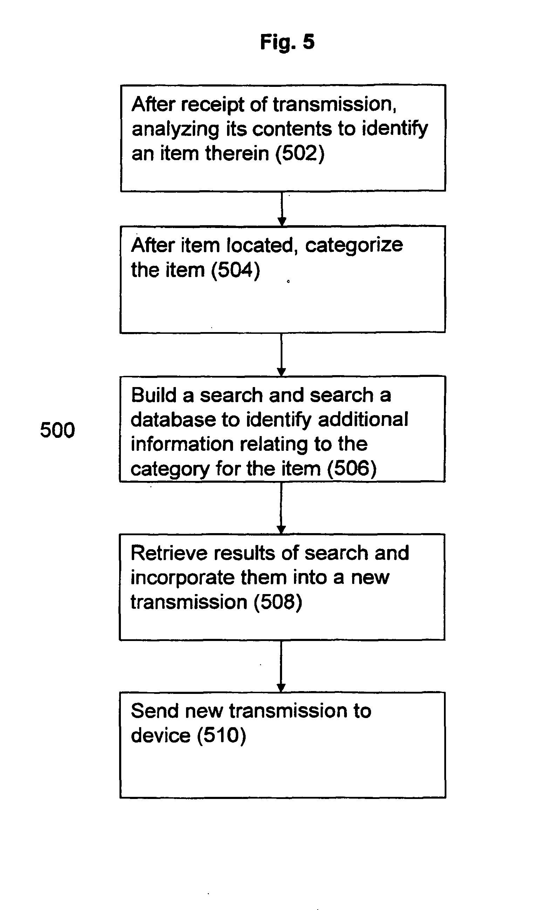

Device 10 utilizes several interfaces to link an item in a transmission to related information that is used by another application or is provided from an external source: operating system 242 provides microprocessor-level system interface controls for applications 222; virtual machine 240 defines a software "sandbox" around its contained applications and data; and interfaces 238 are software modules that are transfer data between applications 222 and data stored in memory 216, allowing an application to access different data that may be primarily intended for another application 222. Further detail on these elements is provided below in relation to Fig. 5B.

Turning back to other elements of device 10, in Fig. 2, communication functions, including data and voice communications, are performed through the communication sub-system 206 and the short-range communication sub-system 208. Collectively, sub-systems 206 and 208 provide the signal-level interface for all communication technologies processed by device 10. Various applications 222 provide the operational controls to further process and log the communications. Communication sub-system 206 includes receiver 224, transmitter 226 and one or more antennas, illustrated as receive antenna 228 and transmit antenna 230. In addition, communication sub-system 206 also includes processing module, such as digital signal processor (DSP) 232 and local oscillators (LOs) 234. The specific design and implementation of communication sub-system 206 is dependent upon the communication network in which device 10 is intended to operate. For example, communication sub-system 206 of device 10 may operate with the Mobitex (trade-mark), DataTAC (trade-mark) or General Packet Radio Service (GPRS) mobile data communication networks and also operate with any of a variety of voice communication networks, such as Advanced Mobile Phone Service (AMPS), Time Division Multiple Access (TDMA), Code Division Multiple Access CDMA, Personal Communication Service (PCS), Global System for Mobile Communication (GSM), etc. Other types of data and voice (telephonic) networks, both separate and integrated, may also be utilized with device 10. In any event, communication sub-system 206 provides device 10 with the capability of communicating with other devices using various communication technologies, including instant messaging (IM) systems, text messaging (TM) systems and short message service (SMS) systems.

In addition to processing communication signals, DSP 232 provides control of receiver 224 and transmitter 226. For example, gains applied to communication signals in receiver 224 and transmitter 226 may be adaptively controlled through automatic gain control algorithms implemented in DSP 232.

In a data communication mode, a received signal, such as a text message or web page download, is processed by the communication sub-system 206 and is provided as an input to microprocessor 202. The received signal is then further processed by microprocessor 202 which can then generate an output to display 14 or to an auxiliary I/O device 210. A device user may also compose data items, such as e-mail messages, using keypad 24, thumbwheel 20 and/or some other auxiliary I/O device 210, such as a touchpad, a rocker switch, a separate thumbwheel or some other input device. The composed data items may then be transmitted over communication network 30 via communication sub-system 206. Sub-system 206 may also detect when it is out of communication range for its remote systems.

In a voice communication mode, overall operation of device 10 is substantially similar to the data communication mode, except that received signals are output to speaker 16 and signals for transmission are generated by microphone 28. Alternative voice or audio I/O sub-systems, such as a voice message recording sub-system, may also be implemented on device 10. In addition, display 14 may also be utilized in voice communication mode, for example, to display the identity of a calling party, the duration of a voice call, or other voice call related information.

Short-range communication sub-system 208 enables communication between device 10 and other proximate systems or devices, which need not necessarily be similar devices. For example, the short-range communication sub-system may include an infrared device and associated circuits and components, or a Bluetooth (trade-mark) communication module to provide for communication with similarly-enabled systems and devices.

For device 10 to send and receive communication signals over network 30, it may require network registration or activation procedures to have been completed. Network access may be associated with a subscriber or user of device 10. One mechanism used to identify a subscriber is device to provide a SIM/RUIM interface (i.e. Subscriber Identity Module or a Removable User Identity Module, not shown) in device 10 and to require insertion of a SIM/RUIM card into the interface. The SIM card or RUIM is one type of a conventional "smart card" that can be used to identify a subscriber of device 10 and to personalize device 10, among other things. In some configurations, without the SIM card, device 10 would not be fully operational for communication with network 30. As such, mobile device 10 may operate using a Subscriber Identity Module (SIM) card (not shown) which is connected to or inserted in device 10 at SIM interface 204. Since SIM card is coupled to SIM interface 204, it is coupled to an external controller (not shown) through communication lines. In order to identify the subscriber, SIM card contains some user parameters such as an International Mobile Subscriber Identity (IMSI). An advantage of using SIM card is that end users are not necessarily bound by any single physical mobile station. SIM card may store additional user information for the mobile station as well, including datebook (or calendar) information and recent call information.

Powering the entire electronics of the mobile handheld communication device is power source 236. Preferably, the power source 236 includes one or more batteries. More preferably, the power source 236 is a single battery pack, especially a rechargeable battery pack. A power switch (not shown) provides an "on/off' switch for device 10.

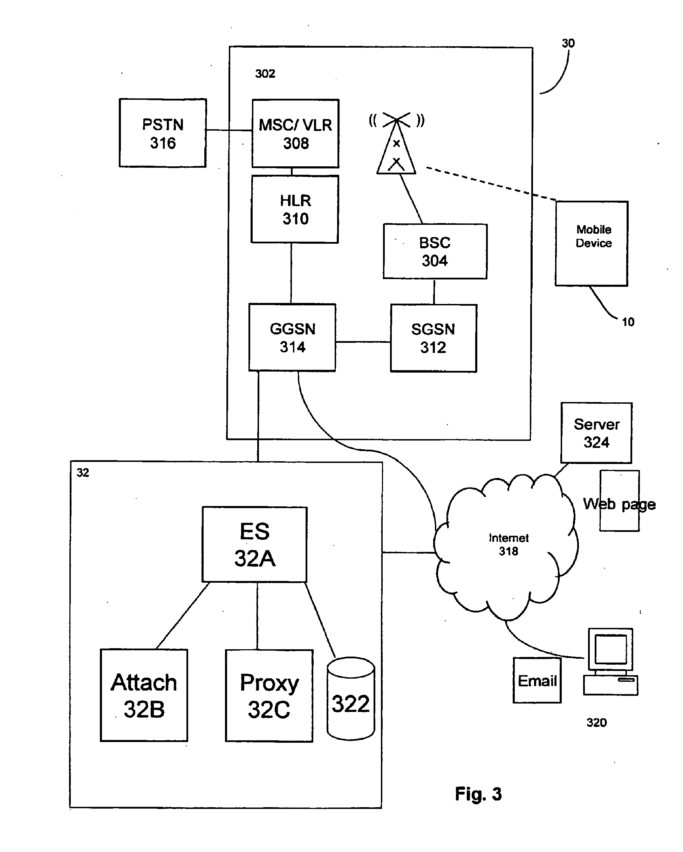

Some further aspects of an embodiment will now be described in greater detail with reference to Fig. 3, which illustrates system 32 for provisioning an associated resource for a mobile communication device 10 through network 30.

Mobile station 302 provides exemplary transmission components of a communication station in wireless network 30. Station 302 is a transceiver that provides wireless network coverage for a particular coverage area commonly referred to as a "cell". The transceiver equipment transmits communication signals to and receives communication signals from mobile stations within its cell via station 302. The transceiver equipment normally performs such functions as modulation and possibly encoding and/or encryption of signals to be transmitted to the mobile station in accordance with particular, usually predetermined, communication protocols and parameters, under control of its controller. The transceiver equipment similarly demodulates and possibly decodes and decrypts, if necessary, any communication signals received from mobile station 302 within its cell. Communication protocols and parameters may vary between different networks. For example, one network may employ a different modulation scheme and operate at different frequencies than other networks.

Wireless station 302 may be configured in accordance with General Packet Radio Service (GPRS) and a Global Systems for Mobile (GSM) technologies. Wireless station 302 includes a base station controller (BSC) 304 with an associated tower station 306, a Mobile Switching Center (MSC) 308, a Home Location Register (HLR) 310, a Serving General Packet Radio Service (GPRS) Support Node (SGSN) 312 and a Gateway GPRS Support Node (GGSN) 314. MSC 308 is coupled to BSC 304 and to a landline network, such as a Public Switched Telephone Network (PSTN) 316. SGSN 312 is coupled to BSC 304 and to GGSN 314, which is in turn coupled to a public or private data network 318 (such as the Internet). HLR 310 is coupled to MSC 308, SGSN 312 and GGSN 314.

Station 302 receives transmissions destined for device 10 from other devices and / or from servers 32, which are connected to station 302. In an embodiment, a set of servers can be provided, including enterprise server 32A, attachment server 32B, and proxy server 32C. Enterprise server 32A is an interface for transmissions sent from an originating device (e.g. another device 10 or computer 320) destined to device 10. As one function server 32A receives all inbound emails destined for device 10 and repackages and formats them into transmissions that can be processed by station 302 for transmission to device 10. Attachment server 32B stores and formats inbound attachments to transmissions processed by server 32A destined for device 10. Proxy server 32C generates and retrieves additional data relating to content in an inbound transmission. The additional data can then be provided to either the attachment server 32B or incorporated into the repackaged transmission. For the sake of reference and not limitation, the term "inbound" is used to refer to transmissions directed to device 10 and "outbound" refers to transmissions from device 10 to network 30.

Briefly, processing of an inbound transmission destined for device 10 operates as follows, using an inbound email as an example.

Initially computer 320 generates the email and initiates its transmission thereto through internet 318 destined for device 10. The constituted email has a header containing source and destination addressing information therein. By following the addressing information in the header, the email is eventually forwarded to enterprise server 32A as it has been associated with transmissions destined to device 10.

Enterprise server 32A has processes to examine and retrieve the destination information for device 10 from the header of the email. For transmission of the email to device 10, server 32A creates a new transmission that repackages the contents and other information of the email into a compatible format for transmission, reception and manipulation by device 10. For example, the new transmission may include formatting of the contents of the original email to suit the physical display parameters of display 14 on device 10. Also, attachments of the email may be reformatted or scanned and reconstituted as facsimiles to accommodate for any similar display / processing requirements of device 10. The repackaged transmission is provided to station 302 for transmission to device 10 over wireless network 30.

It will be appreciated that for an embodiment, a transmission may be any type of message or communication addressed to device 10, including an email, a Short Message Service (SMS) message a telephone call, a Family Radio Service (FRS) transmission, Multimedia Message Service (MMS), Instant Messages (IM) and others.

When repackaging the email for device 10, server 32A, the new transmission includes a new message structure that contains a new header with appropriate addressing information for device 10. This may include particular cell and device information about device 10 relating to transmission protocols for network 30 that was not present in the original email.

As the body of the email is being inserted into the new transmission, a parser process in server 32A scans the text of the body for any additional keywords, phrases, number sequencers or addressing prefixes that may denote an item in the email for which relevant information should be sought and associated with the item. For example, an item may be a person's name in the email text and the information may be the person's address, telephone number, email address or other information. Similarly, another item may be a telephone number and the information may be the identification particulars associated with that telephone number. Yet another item may be a URL address embedded in the email. The associated information may be a copy of the data retrieved from that address itself. Parsing techniques and database comparison techniques known in the art may be used by the parser process to scan the text and identify such items.

When a segment of text is identified by predetermined delimiters (e.g. spaces, punctuation marks, capitalized characters, etc.), the segment may be analyzed to determine whether the text is a notable item or not. Whether or not a segment of text is notable may be determined by the presence or absence of a predetermined set of alphanumeric characters or additional symbols in the text.

When the parser identifies a notable item, the item can be analyzed to determine its type or category (e.g. phone number, name, URL, etc.). It will be appreciated that this determination may be part and parcel of the process of identifying the item itself. Again, the presence or absence of another predetermined set of alphanumeric characters or additional symbols in the item may be used to determine its type. For example, if the item contains the text string "www.", then the item may be characterized as a URL. Similarly, if the item contains the a predetermined length of numeric characters, e.g."(888)S55-1212" then the item may be characterized as a telephone number. Once the item has been categorized, additional searches relating to the category can be initiated, which are controlled by proxy server 32C. Server 32C communicates with sever 32A to identify which items have been identified by server 32A and their associated categories. In some instances, server 32C analyzes the items to associate each item with one or more appropriate categories. There may be two or more items in a transmission that may be evaluated. Each or a selection of the items may be processed for further information. There may be a ranking of the items which may be used to determine which items are processed further.

For a given item and its category, proxy server 32C may have one or more predetermined sources or databases 322 for additional, related information. For example, if the item is a categorized as a person's name, server 32C may have an associated address book in database 322 that server 32C or some other process can search for relevant entries relating to that name. Server 32C has necessary query generation and response processing processes to populate a query for database 322 based on the item and to retrieve results from the query and provide them to server 32A for incorporation into the new transmission. It will be appreciated that if an item cannot be categorized, a default set of internal or external queries may still be executed for it to attempt to find additional information.

However, server 32C has processes that allow it to generate and process external queries relating to an item and its categories, including internet queries. For example, if an item is a telephone number, server 32C has a process to populate a "reverse number" look up query to an appropriate website (e.g. "www.Canada411.com") at remote server 324. Again, server 32C also has a process to retrieve and encapsulate any results received from such query. Server 32C may have access to a database providing a list of alternative websites for the desired additional information (e.g. a "www.Canada411.com" page request, which is a telephone directory search engine for Canadian telephone numbers, or a comparable engine for telephone numbers in another jurisdiction). The additional information may also be constructed from a series of sources, including one or more internet queries with one or more local database searches from database 322.

If the item is a URL, server 32A has a process to automatically access the address, retrieve the page (as shown at server 324) and store it in attachment server 32B. When the transmission is created, the stored page may be directly linked to the new transmission. As such when the user at device 10 accesses the new transmission (which is a facsimile of the original email) and activates the contained URL, enterprise server 32A provides device 10 with the locally stored copy of the contents of the URL stored at server 32B, instead of initiating a request for the page through internet 318. This pre-fetching of a URL provides faster access to the contents of the URL, as in most cases the search has already been conducted by the time the URL is accessed by the user at device 10.

If the item is categorized as being associated with a place (i.e. location), then server 32A has a process to automatically access the address of the place and initiate a map search (e.g. using Yahoo maps) to generate directions from the last known location of device 10 to the location of the place. The search is initiated and the results are retrieved and stored as an attachment server 32B. When the transmission is created, the stored page may be directly linked to the new transmission.

In other embodiments, other processes may be provided to identify relevant items in a transmission, then to identify and seek relevant additional information relating to those items, and then associate that information with a corresponding transmission destined for device 10. The information may be associated with the new transmission by an appropriate tag in the header of the new transmission. The tag may include a reference to the new information and the item. Alternatively or additionally a new attachment may be provided with the new transmission.

It will be appreciated that other techniques of associating the information in a new transmission may be used, including embedding HTML or other markup languages in the body of the new transmission. The embedded content may provide a reference to web content, etc. One or more attachments may also be added to the end of the new transmission. Further, when the server retrieves the related search results, it may include all or some part of the results with the new transmission. For example if contents of a web page are retrieved, it is possible to include only a segment of the web page. For example, the segment may be an N-byte segment from the page (from the front, end or middle). Alternatively or additionally, the segment may be filtered to not include image files from the page, etc. If some content is not provided in the new transmission, the redacted content may be downloaded with an "auto-more" function embedded in the transmission to request the content or additional requests from the user.

It will be appreciated that any combination of sets or subsets of the above noted techniques in attaching and / or inserting information from the search results into the new transmission may be used.

In an embodiment, such processes of fetching, creating and attaching pages, URLs etc. may be done automatically, upon a predetermined condition or at certain time intervals.

Further detail is now provided on aspects of an embodiment relating to extracting the information, data or other material into the new transmission provided to device 10. When device 10 receives the new transmission, it processes to appropriately identify the additional information in the header and display it, as appropriate. In one embodiment, the email application 222 extracts the additional information from the header and selectively produces it on device 10 when the item is activated. The item may be activated while the contents of email is being navigated. Activation or hovering over the item may cause a menu option to be generated on an information balloon to be generated on display 14 of device 10. Such features may be provided through GUI processes operating on device 10.

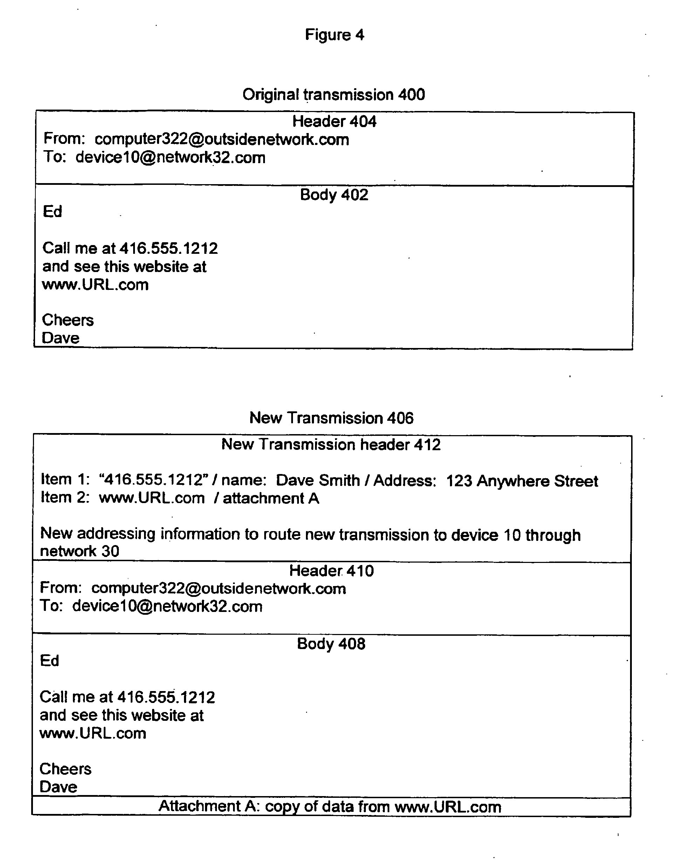

As an example of operation of an embodiment, referring to Fig. 4, original transmission 400 is shown as an email. Email 400 has body section 402 and header section 404. Header section contains origin and destination addressing for email 402. Server 32A scans body section 402 and identifies the following items therein:
item 1: 415.555.1212
item 2: www.URL.com

Each item is identified as the parser process in server 32A scans through the email. Generally, items would be present in either the body section 402 or an associated attachment; however, an item may also be present in the header. Once an item is identified, it is categorized. Item 1 is categorized by server 32A as a telephone number by its series of digits. Item 2 is categorized as an internet address by its "www" prefix and /or its ".com" suffix. Once an item is categorized, additional processes in server 32A can be initiated to attempt to search for information relating to the item. Exemplary categories include: telephone number; name; web address; location; currency; person; place; and thing. An item can be associated with more than one category. For each category, a process is provided that has customized searching processes to attempt to locate additional information about the item. The process can initiate a series of searches, collect the results and provide the results in the new transmission provided to device 10.

As an example, for item 1, a reverse telephone look up is conducted by server 32A. As a first instance, the look up may access any internal telephone directory stored on database 322 through an appropriate database query. Alternatively or additionally, a web-based search may be initiated with a proxy query to a predetermined web site address known to provide such information. Any results obtained from either the database query or the web-based search are collated and filtered and the results are associated with the item in the header of new transmission 406. Similarly, for item 2, the web-page is retrieved, stored and associated with the new transmission.

Referring to Fig. 5, an exemplary flow chart 500 is shown, in receiving a transmission for a device then adding additional information to it. At step 502, a transmission is received (possibly at a server) and a module in the server analyses the contacts to identify (or attempt to identify) the item that is embedded in the transmission. At step 504, presuming the item is located, it is categorized, depending on it contents, tags or other information associated with it. At step 506, a search is built and initiated against a database to attempt to retrieve additional information relating to the item. At step 508, the results of the search are retrieved and the results are incorporated into a "new" transmission destined for the device. The new transmission preferably includes pertinent data from the original transmission. Additionally or alternatively, the new transmission may be an augmentation or modification of the original transmission. Finally, at step 510, the new transmission is set to the device. It will be appreciated that the basic steps may be supplemented with additional checks and may execute the steps in different orders.

The following Table A provides exemplary categories of items, with examples, and exemplary types of related information, with sources of same.

**Table A**

| Item | Examples of Item | Exemplary Related Information | Sources of Related Information |
|---|---|---|---|
| Name | name in email address name in body of transmission | address of the person telephone number of the person directions to an associated place for the person | local address database internet search internet map request |
| Place | town in email street name in email restaurant name in SMS message | Address of the place Telephone number of the place Map / Directions to place | local address database internet search Map search through internet |
| Thing | noun in email | additional Google / wikipedia search using "thing" as keyword | internet search |
| Telephone number | telephone number in email | name associated with telephone number | local address database internet reverse lookup search |
| URL | URL embedded in email or attachment | page of URL itself | fetched page from remote server through internet |

Next, using the items and related information found, a new transmission 406 is generated by server 32A. New transmission includes either a copy or facsimile of body section 402 and header section 404 in new sections 408 and 410, respectively. New sections 408 and 410 are formatted such that device 10 can more readily display their contents. Header 412 includes a record of each item found in the original transmission as well as any associations or additional information found relating to it.

In other embodiments, the "new transmission" may be simply the original transmission forwarded to device 10 with any additional information either inserted into available data fields in the original transmission or attached to the original transmission as a new attachment.

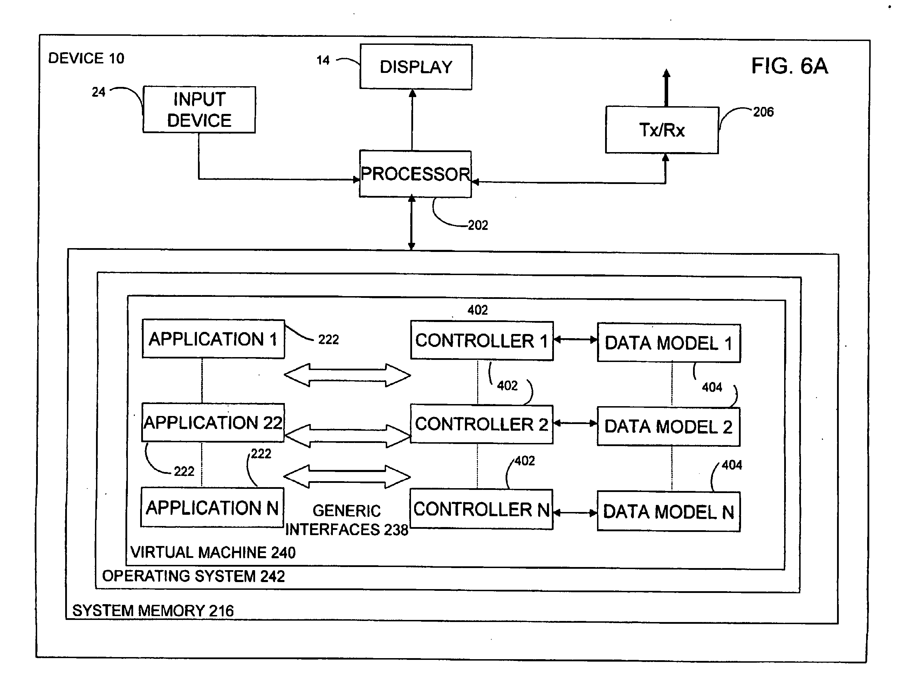

In addition, device 10 has interface 238 to facilitate in additional associations that allow additional data for an item to be provided through other applications operating on device 10. Referring to Fig. 6A, operationally, software interface 238 of the device 10 is extended using the software modules 602 and 604, and the generic interfaces 606. The software modules 602 and 604 are executed by the virtual machine 606, which is preferably an object oriented run-time environment such as Sun Micro System's J2ME (JAVA 2 Micro Edition) trade mark. The software modules 602 and 604 are preferably constructed using a JAVA compiler capable of enforcing a software application interoperation architecture that takes on the form of a collection of compiled classes and objects along with an application programming interface (API).

Data models 604 are classes that represent the various types of data stored on the device 10. The types of data may include, for example, e-mail messages, address book entries, calendar items, tasks, and memos. In addition, next-generation mobile devices may store data such as SMS messages, phone call logs, voice mail indicators, WAP requests, multiple e-mail sources, HTML content exchanges, specialized banking services, financial services, field server and customer service offerings, or downloads from corporate databases.

Data models 604 are preferably stored on the mobile device 10 in the form of Java objects for execution in the J2ME run time environment. Each data model 604 is designed for a particular type of data object, and includes specialized functions for retrieving information associated with the data type. For example, an e-mail message model may have specialized functions for retrieving the subject of the e-mail object and for retrieving the body of the e-mail object. A calendar entry model, on the other hand, may include specialized functions specific to a calendar entry object, such as a function capable of retrieving the duration of an appointment.

Each type of data model 604 has an associated controller 602 capable of interacting with the specific functions of the data model 604 type and representing the data model 604 in a uniform way to the rest of the software interface system. Operationally, the controllers 602 isolate the data models 604 from the applications 222, and implement the generic interfaces 606 such that each controller 602 can be easily hosted by any application 222 that supports the generic interfaces 606. In this manner, the controllers 602 present a common, standard interface to any application 222; and each application that supports the generic interfaces 606 is able to interact with any arbitrary controller 602. For example, an e-mail application using one or more of the generic interfaces 606 can interface with an address book controller to retrieve an e-mail address from an address book data model. Moreover, existing controllers 602 can be used to interface with any new applications supporting the generic interfaces 606. In this manner, a mobile device user is able to install new applications without having to upgrade operating system 604 of device 10, or any interface software that allows device 10 to be mapped as a virtual machine and is able to interface the new applications with data objects already stored on the mobile device (e-mail, addresses, calendar entries, etc.) without having to perform data type conversions. The flexibility provided by the interoperability of the controllers 602 may also enable the mobile device user to expand the functionality of his or her mobile device 10 by interacting with third party applications, such as banking or other commercial services.

The interaction between an application program 222 and any arbitrary controller 602 is primarily made possible by generic interfaces 606 that are implemented by each controller 602. The generic interfaces 606 are generic in the sense that they are object-oriented as opposed to being specific to a certain type of data. Put another way, each generic interface 606 is preferably programmed to perform a certain operation regardless of the data type. Each application 222 is preferably programmed to query any controller 602 to determine if a controller 602 supports one or more generic interfaces 606 required to perform a given operation. If so, the application 222 then interacts with the controller 602 and its associated data model 604 to complete the operation. For instance, an application 222 may query a controller 602 to determine whether it supports a generic interface 606 capable of painting an object (such as the body of an e-mail message) onto a screen, and if so, then interface with the controller 602 to display the object. In this manner, the same type of generic interface 606 that is used by an application 222 to display the body of an e-mail message could also be used, for example, to display a clipping from a lengthy SMS message. In another example, the same generic interface 606 used to display the e-mail message may also be used to receive an e-mail address from an e-mail controller and interface with an address book application to paint the address into an address file. Preferably, new controllers could also be implemented that support new generic interfaces. Therefore, new controllers can easily be designed to interface with upgraded applications supporting new functions, and still be compatible with older applications as long as the new controller includes the older generic interfaces.

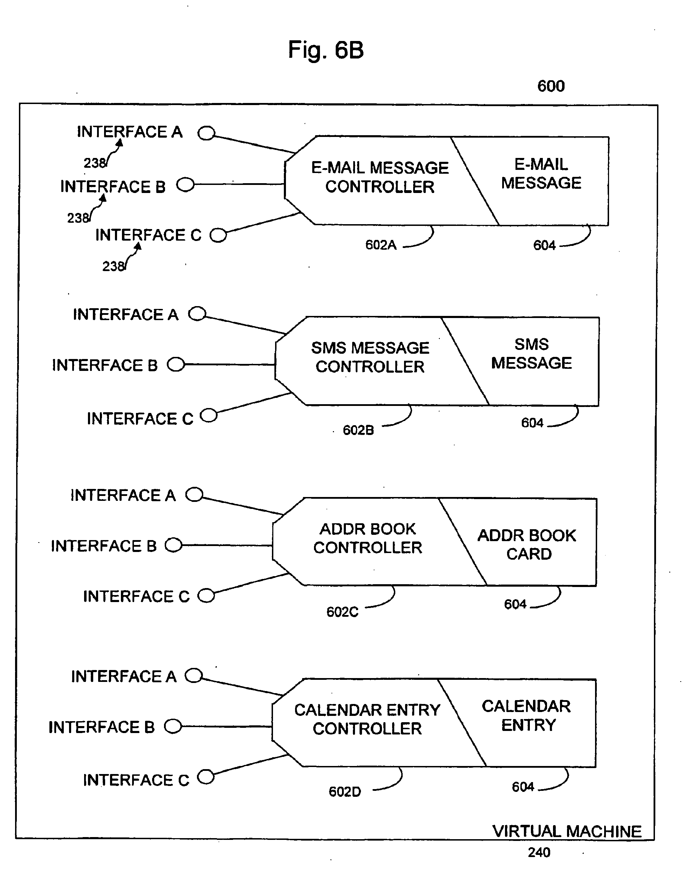

Fig. 6B is a block diagram 608 illustrating the interaction between four exemplary controllers 602A, 602B, 602C and 602D, and four exemplary data models 604A-604D. The exemplary controllers shown in the diagram 250 include an e-mail message controller 602A, an SMS message controller 602B, an address book card controller 602C, and a calendar entry controller 602D. Each exemplary controller 602A-D is unique to a data model type; respectively shown in the diagram 408 as an e-mail message 604A, a SMS message 604B, an address book card 604C, and a calendar entry 604D. The uniqueness of the controllers and their corresponding data models is illustrated by the varying shapes at the interface between each exemplary controller 602A-D and data model 604A-D. In addition, each exemplary controller 602A-D includes three generic interfaces: Interface 606A, Interface 606B, and Interface 606C. Although every controller 602A-D is unique to a data model 604A-D, the same generic interfaces 606A-C are implemented universally throughout the software interface. Therefore, each exemplary controller 602A-D is able to interface with any application program that supports the generic interfaces 606A-C.

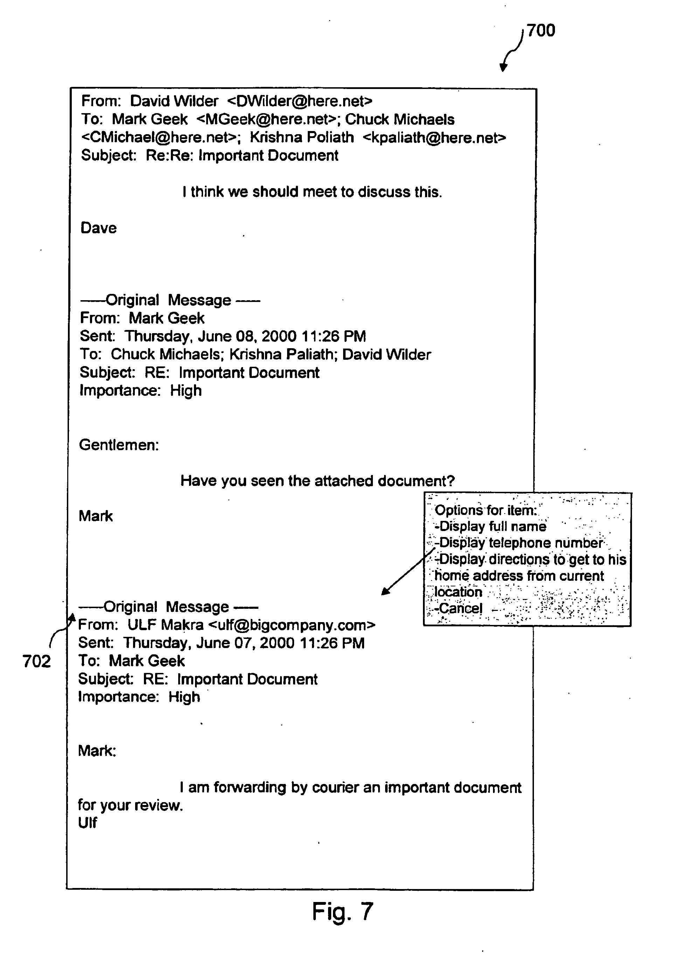

Fig. 7 illustrates an implementation 700 of a new transmission provided to device 10 that has been processed by server 32A (Fig. 3). Therein, in new transmission 700, the e-mail address 702 appearing within the displayed e-mail address 702 are action-linked according to associations made to their item lists in their headers. Dialog box 704 shows some exemplary actions that may be provided relating to the information associated with the email address, identified as an "item" in the new transmission.

It will be appreciated that modules, servers, processes and other applications described herein relating to the embodiments can be implemented using known programming techniques, languages and algorithms. The titles of the modules are provided as a convenience to provide labels and assign functions to certain modules. It is not required that each module perform only its functions as described above. As such, specific functionalities for each application may be moved between applications or separated into different applications. Modules may be contained within other modules. Different signalling techniques may be used to communicate information between applications using known programming techniques. Known data storage, access and update algorithms allow data to be shared between applications. It will further be appreciated that other applications and systems on device may be executing concurrently with any application. As such, one or more aspects of the described modules may be structured to operate in as a "background" application on the device, using programming techniques known in the art.

The present disclosure is defined by the claims appended hereto, with the foregoing description being merely illustrative of a preferred embodiment of the invention. Those of ordinary skill may envisage certain modifications to the foregoing embodiments which, although not explicitly discussed herein, do not depart from the scope of the invention, as defined by the appended claims.

## Claims

1. A method for a server to provide information relating to an item embedded in an electronic transmission addressed to an electronic device (10), the transmission having a first header and a body, the method comprising:
at said server
receiving said electronic transmission prior to delivery to said electronic device;
analyzing the body of the transmission to identify said item;
identifying a category relating to said item (504) comprising any of: a name or a place;
populating a database query for information related to said item based on the category (506) of the item;
initiating a search through the internet for said information using said database query;
retrieving results from said search;
creating a new transmission for said device, said new transmission including data from said electronic transmission and information located through said results of said search; and
transmitting (510) said new transmission to said device (10)*ᵢ*
wherein said information is any identification information relating to said name or said place.

2. The method as claimed in claim 1, wherein said new transmission comprises a second header containing said results from said search, said first header and said body.

3. The method of any preceding claim in which the transmission is an email.

4. The method of any preceding claim, wherein when analyzing the body of the transmission a segment of text in the body is analyzed using predefined delimiters to determine whether said segment is an item or not.

5. A server (32) for providing information relating to an item embedded in an electronic transmission addressed to an electronic device (10), the server being configured to perform the steps of the method of any preceding claim.

6. The server of claim 5, comprising:
a first process module (32A) to perform the analysis of the contents of said transmission;
a second process module (32C) to search through the internet;
a third process module (32A) to retrieve the results from said search and carry out said association; and
a fourth process module to prepare and send said new transmission.

7. The server as claimed in claim 6, wherein said first process module is arranged to intercept said transmission from a transmission stream prior to its delivery to said device.

8. The server as claimed in claim 6 or 7, wherein said fourth process module is arranged to transmit said new transmission to said device.

9. A computer readable medium storing computer readable instructions executable by a processor of a computing system to cause said system to implement the steps of the method of any one of claims 1 to 4.

## Patentansprüche

1. Verfahren für einen Server zum Vorsehen von Information, die ein Element betrifft, das in einer elektronischen Übertragung enthalten ist, die an eine elektronische Vorrichtung (10) adressiert ist, wobei die Übertragung einen ersten Header und einen Hauptteil hat, wobei das Verfahren aufweist:
an dem Server
Empfangen der elektronischen Übertragung vor einer Lieferung an die elektronische Vorrichtung;
Analysieren des Hauptteils der Übertragung, um das Element zu identifizieren;
Identifizieren einer Kategorie, die das Element (504) betrifft, das eines aufweist aus: einem Namen oder einem Ort;
Befüllen einer Datenbankabfrage nach Information, die das Element betrifft, basierend auf der Kategorie (506) des Elements;
Initiieren einer Suche durch das Internet nach der Information unter Verwendung der Datenbankabfrage;
Abrufen von Ergebnissen aus der Suche;
Erzeugen einer neuen Übertragung für die Vorrichtung, wobei die neue Übertragung Daten aus der elektronischen Übertragung und Information umfasst, die durch die Ergebnisse der Suche lokalisiert wird; und
Übertragen (510) der neuen Übertragung an die Vorrichtung (10), wobei die Information eine Identifikationsinformation ist, die den Name oder den Ort betrifft.

2. Verfahren gemäß Anspruch 1, wobei die neue Übertragung einen zweiten Header aufweist, der die Ergebnisse aus der Suche, den ersten Header und den Hauptteil enthält.

3. Verfahren gemäß einem vorhergehenden Anspruch, wobei die Übertragung eine Email ist.

4. Verfahren gemäß einem vorhergehenden Anspruch, wobei bei einem Analysieren des Hauptteils der Übertragung ein Segment von Text in dem Hauptteil analysiert wird unter Verwendung vordefinierter Delimiter, um zu bestimmen, ob das Segment ein Element ist oder nicht.

5. Server (32) zum Vorsehen von Information, die ein Element betrifft, das in einer elektronischen Übertragung enthalten ist, die an eine elektronische Vorrichtung (10) adressiert ist, wobei der Server konfiguriert ist, die Schritte des Verfahrens gemäß einem vorhergehenden Anspruch durchzuführen.

6. Server gemäß Anspruch 5, der aufweist:
ein erstes Verarbeitungsmodul (32A), um die Analyse der Inhalte der Übertragung durchzuführen;
ein zweites Verarbeitungsmodul (32C), um durch das Internet zu suchen;
ein drittes Verarbeitungsmodul (32A), um die Ergebnisse aus der Suche abzurufen und die Zuordnung auszuführen; und
ein viertes Verarbeitungsmodul, um die neue Übertragung vorzubereiten und zu senden.

7. Server gemäß Anspruch 6, wobei das erste Verarbeitungsmodul ausgebildet ist, die Übertragung vor ihrer Lieferung an die Vorrichtung aus einem Übertragungs-Stream abzufangen.

8. Server gemäß Anspruch 6 oder 7, wobei das vierte Verarbeitungsmodul ausgebildet ist, die neue Übertragung an die Vorrichtung zu übertragen.

9. Computerlesbares Medium, das computerlesbare Anweisungen speichert, die durch einen Prozessor eines Computersystems ausführbar sind, um das System zu veranlassen, die Schritte des Verfahrens gemäß einem der Ansprüche 1 bis 4 zu implementieren.

## Revendications

1. Procédé permettant à un serveur de fournir des informations se rapportant à un article intégré dans une transmission électronique destinée à un dispositif électronique (10), la transmission ayant un premier en-tête et un corps, le procédé comprenant :
au niveau dudit serveur, le fait
de recevoir ladite transmission électronique avant livraison audit dispositif électronique ;
d'analyser le corps de la transmission en vue d'identifier ledit article ;
d'identifier une catégorie se rapportant audit article (504) comprenant l'un d'un nom ou d'un lieu ;
de charger une interrogation d'une base de données à propos d'information se rapportant audit article sur la base de la catégorie (506) de l'article ;
de lancer une recherche desdites informations par internet en utilisant ladite interrogation de base de données ;
de récupérer des résultats issus de ladite recherche ;
de créer une nouvelle transmission pour ledit dispositif, ladite nouvelle transmission comportant des données issues de ladite transmission électronique et des information localisées à travers lesdits résultats de ladite recherche ; et
de transmettre (510) ladite nouvelle transmission audit dispositif (10),
où lesdites informations consistent en toute information d'identification se rapportant audit nom ou audit lieu.

2. Procédé tel que revendiqué dans la revendication 1, dans lequel ladite nouvelle transmission comprend un deuxième en-tête contenant lesdits résultats provenant de ladite recherche, ledit premier en-tête et ledit corps.

3. Procédé de l'une des revendications précédentes dans lequel la transmission est un courrier électronique.

4. Procédé de l'une des revendications précédentes, dans lequel en analysant le corps de la transmission, un segment de texte dans le corps est analysé en utilisant des délimiteurs prédéfinis pour déterminer si ledit segment est un article ou non.

5. Serveur (32) destiné à fournir des informations se rapportant à un article intégré dans une transmission électronique destinée à un dispositif électronique (10), le serveur étant configuré pour réaliser les étapes du procédé de l'une des revendications précédentes.

6. Serveur de la revendication 5, comprenant :
un premier module de traitement (32A) pour réaliser l'analyse des contenus de ladite transmission ;
un deuxième module de traitement (32C) pour faire une recherche par internet ;
un troisième module de traitement (32A) pour récupérer les résultats issus de ladite recherche et pour exécuter ladite association ; et
un quatrième module de traitement pour préparer et envoyer ladite nouvelle transmission.

7. Serveur tel que revendiqué dans la revendication 6, dans lequel ledit premier module de traitement est agencé pour intercepter ladite transmission à partir d'un flux de transmission avant sa livraison audit dispositif.

8. Serveur tel que revendiqué dans la revendication 6 ou 7, dans lequel ledit quatrième module de traitement est agencé pour transmettre ladite nouvelle transmission audit dispositif.

9. Support lisible par ordinateur stockant des instructions lisibles par ordinateur pouvant être exécutées par un processeur d'un système informatique pour amener ledit système à mettre en oeuvre les étapes du procédé de l'une quelconque des revendications 1 à 4.
